# EUROPEAN PATENT SPECIFICATION

(11) **EP 4 207 025 B1**
(45) Date of publication and mention of the grant of the patent: **28.01.2026**
(21) Application number: 21861224.0
(22) Date of filing: 10.08.2021
(51) Int. Cl.: G06Q 20/06, G06Q 20/38, G06Q 30/06

(54) **MANAGEMENT SYSTEM AND MANAGEMENT METHOD**
VERWALTUNGSSYSTEM UND VERWALTUNGSVERFAHREN
SYSTÈME ET PROCÉDÉ DE GESTION

(30) Priority: 25.08.2020 JP 2020142159
(43) Date of publication of application: 05.07.2023
(73) Proprietor: NTT Docomo Business, Inc., Tokyo 100-8019 (JP)
(72) Inventor: HIGASHIDE, Haruhisa, Tokyo 100-8019 (JP); KATOU, Yasuhide, Tokyo 100-8019 (JP); TOMODA, Mitsuya, Tokyo 100-8019 (JP); NUMA, Kentaro, Tokyo 100-8019 (JP)
(74) Representative: Hoffmann Eitle
(86) International application number: PCT/JP2021/029537
(87) International publication number: WO 2022/044796

(56) References cited:
- JP-A- 2004 240 858
- JP-A- 2008 107 874
- JP-A- 2013 114 495
- JP-A- 2020 052 878
- JP-B1- 6 689 441
- US-A1- 2016 148 192
- US-A1- 2020 226 561
- US-B1- 10 621 563

## Description

### [Technical Field]

The present invention relates to a management system and a management method.

### [Background Art]

Conventionally, in traveling abroad, travelers exchange domestic currency for the currency of a travel destination at a currency exchange counter on the basis of an exchange rate at the time of currency exchange, and in returning home, the travelers exchange the currency of the travel destination for domestic currency at the currency exchange counter. Furthermore, the travelers pay a fee for currency exchange every time of currency exchange.

Conventionally, general commerce, such as shopping, or electronic commerce via the Internet using a mobile terminal having an electronic wallet function of holding electronic money without using cash has come into public use.

US 2020/0226561 A1 discloses an information processing apparatus including a management unit configured to manage setting data relating to remittance for paying at least a part of a price associated with a settled transaction from a payer to a payee associated with the settled transaction. The apparatus further includes a generation unit configured to generate instruction data containing instructions to display a screen requesting remittance from the payer based on the setting data, and an output unit configured to output the instruction data generated by the generation unit. The screen requesting remittance displays information identifying the settled transaction associated with the setting data.

US 10,621,563 B1 discloses a technique for enabling a consumer who uses a payment object to pay for goods or services to specify, by using a mobile device, how the transaction amount should be apportioned among multiple payers. The technique involves communication between a mobile payment application installed on the consumer's mobile device and a remote payment service system (PSS). The mobile payment application enables the user to specify how many payers there are, who the payers are, and exactly how the transaction amount should be apportioned among the payers. The mobile payment application communicates this information to the PSS, which then executes or triggers reimbursement to carry out the specified apportionment.

US 2016/0148192 A1 discloses a system or method of operating a user held multicurrency card in a transaction with a seller operating in a first currency; the system or method comprising: a card capable of being read by a reader; an e-wallet associated with the card and holding data relating to the card, a plurality of amounts of a plurality of currencies stored on e-wallet; a back-end system for receiving card data from the reader and a payment amount required by the seller via a network and for interfacing with the e-wallet to enable authorization of any payments; wherein in use the back-end system receives the data from the reader for a transaction and determines if the e-wallet has sufficient money in the first currency to settle the transaction and if so authorizes settlement of the payment amount.

### [Citation List]

### [Patent Citation]

Patent Document 1: Japanese Laid-open Patent Publication No. 2006-318229

### [Summary of Invention]

### [Technical Problem]

However, a related method has a problem of time and effort for currency exchange. Stated another way, conventionally, it has been requested that travelers go to a currency exchange counter during operation before and after travel, and this has caused a problem of time and effort for currency exchange.

Furthermore, even if travelers have domestic electronic money, the domestic electronic money of the travelers is not handled in foreign countries. Therefore, in a case where a cost is paid or in a case where the cost is split, electronic money of the travelers themselves fails to be used in some cases.

The present invention has been made in view of the above, and it is an object of the present invention to provide a management system and a management method that are capable of reducing a burden of currency exchange, and enhancing the convenience of using electronic money.

### [Solution to Problem]

In order to solve the above-described problems and achieve the object, the present invention provides a management system, in accordance with claim 1.

The present invention also includes a management method performed by a management apparatus, in accordance with claim 5.

### [Advantageous Effects of Invention]

According to the present invention, a burden of currency exchange can be reduced, and the convenience of using electronic money can be enhanced.

### [Brief Description of Drawings]

FIG. 1 is a block diagram illustrating an example of a configuration of a management system according to an embodiment.
FIG. 2 is a block diagram illustrating an example of a configuration of a server apparatus according to the embodiment.
FIG. 3 is a diagram illustrating an example of a data configuration of an amount-of-money information storage.
FIG. 4 is a diagram illustrating an example of a data configuration of a use history information storage.
FIG. 5 is a diagram illustrating an example of a mobile settlement application screen.
FIG. 6 is a diagram illustrating a flow of processing of a bill splitting service in the management system.
FIG. 7 is a diagram illustrating an example of a screen of a terminal in the use of the bill splitting service of the mobile settlement application.
FIG. 8 is a diagram illustrating an example of the screen of the terminal in the use of the bill splitting service of the mobile settlement application.
FIG. 9 is a diagram illustrating a flow of processing of the bill splitting service in the management system.
FIG. 10 is a diagram illustrating an example of the screen of the terminal in the use of the bill splitting service of the mobile settlement application.
FIG. 11 is a diagram illustrating an example of the screen of the terminal in the use of the bill splitting service of the mobile settlement application.
FIG. 12 is a sequence diagram illustrating a processing procedure of management processing according to an embodiment not covered by the subject-matter of the claims.
FIG. 13 is a sequence diagram illustrating another processing procedure of the management processing according to an embodiment not covered by the subject-matter of the claims.
FIG. 14 is a diagram illustrating another example of the flow of the processing of the bill splitting service in the management system.
FIG. 15 is a diagram illustrating another example of the flow of the processing of the bill splitting service in the management system.
FIG. 16 is a sequence diagram illustrating another processing procedure of the management processing according to the embodiment.
FIG. 17 is a diagram illustrating a computer that executes a program.

### [Embodiments for Carrying Out the Invention]

An embodiment of a management system and a management method according to the present application is described in detail below with reference to the drawings. Note that this embodiment is not restrictive of the management system and the management method according to the present application.

### [Embodiment]

In the embodiment described below, a configuration of a management system according to the embodiment, and a flow of processing of the management system and a management method are described in order, and advantageous effects of the embodiment are finally described. In the embodiment, description is provided by using, as an example, a management system that manages settlement processing performed by a terminal apparatus that is mounted with a mobile settlement application that enables plural types of currencies to be held as electronic money in cooperation with credit card settlement. In the embodiment, a case where what is called a bill splitting service in which a cost of merchandise is shared by a plurality of persons is used from among functions of the mobile settlement application is described.

### [Configuration of Management System]

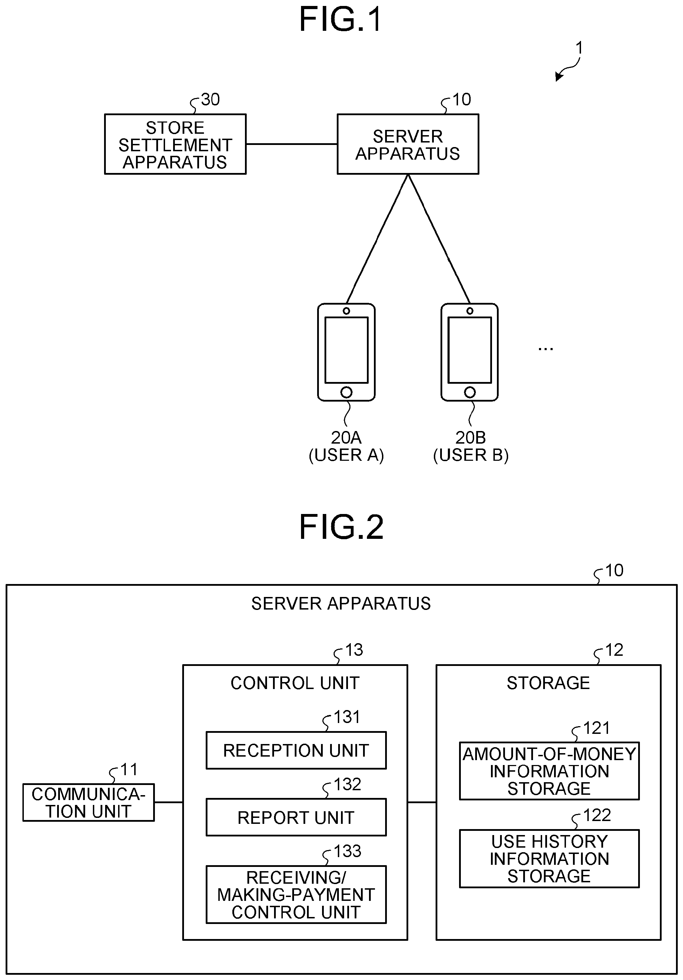

First, the configuration of the management system according to the embodiment is described. FIG. 1 is a block diagram illustrating an example of the configuration of the management system according to the embodiment.

As illustrated in FIG. 1, a management system 1 according to a first embodiment includes a plurality of terminals, such as a terminal 20A that is used by a user A and a terminal 20B that is used by a user B, and a server apparatus 10 (a management apparatus) that manages settlement processing of electronic money of these terminals 20A and 20B via a network or the like. The server apparatus 10 performs communication with a store settlement apparatus 30 via the network or the like. Note that encryption processing or the like is performed on each communication processing among the management system 1, the terminals 20A and 20B (terminal apparatuses), and the store settlement apparatus 30. Furthermore, the configuration illustrated in FIG. 1 is merely an example, and a specific configuration or the numbers of respective apparatuses is not particularly limited.

The management system 1 provides a service that enables another user to pay a split amount of money with electronic money in a type of currency that a user desires to receive when the user uses the bill splitting service. The server apparatus 10 controls receiving and making payments in such a way that, in a case where the user A and the user B split the bill by using the bill splitting service but in a case where the user B does not hold electronic money in a currency desired by the user A, the user B can pay a split amount of money with electronic money in the currency desired by the user A that has set bill splitting.

The server apparatus 10 can provide a multiple currency settlement service in which in a mobile settlement application executed in the terminals 20A and 20B, foreign currency is purchased (exchanged) in cooperation with credit card settlement, and is held as electronic money, and settlement is performed with electronic money in a currency desired by a user. In the present embodiment, description is provided by using, as an example, a case where in Japan, the user A has used the bill splitting service of the mobile settlement application in order to split the bill with the user B.

The terminal 20A or 20B is a smart device, such as a smartphone or a tablet, that is mounted with the mobile settlement application, and is a portable terminal apparatus that can perform communication with an arbitrary server apparatus 10 via a wireless communication network. Note that the terminal 20A or 20B may be an information processing apparatus such a desktop personal computer (PC) or a laptop PC. Furthermore, the terminal 20A or 20B may have a function of specifying a current location by using a positioning system such as a global positioning system (GPS), and outputting locational information indicating the specified location.

The store settlement apparatus 30 is, for example, an information processing apparatus that achieves an electronic settlement service in which payment is completed by holding the terminal 20A or 20B over a dedicated reader/writer. It is assumed that the store settlement apparatus 30 can use an electronic money service in Japanese yen.

In the management system 1, under the control performed by the server apparatus 10 of receiving and making payments, the terminal 20A or 20B can exchange Japanese yen that has been loaded by using credit card settlement for each of plural currencies, and can hold each of the plural currencies as electronic money, by using the mobile settlement application. Then, the terminal 20 has a function of making payment to the store settlement apparatus 30 with electronic money, and splitting the bill by using the bill splitting service of the mobile settlement application. In this bill splitting service of the mobile settlement application, a split amount of money can be paid with electronic money in a currency desired by a user that will split the bill.

Accordingly, in the present embodiment, the user A makes a lump-sum payment to a store via the store settlement apparatus 30 with electronic money in a first currency (for example, Japanese yen) that is held in the terminal 20A, and uses the bill splitting service of the mobile settlement application. In this case, the terminal 20A sets a sharing destination (the terminal 20B) of a cost, a type (for example, Japanese yen) of a desired reception currency (the first currency) of the user A, and a shared amount of money. Then, description is provided by using, as an example, a case where the terminal 20B serves as a terminal of the sharing destination, sets a type of a desired payment currency (a second currency) for payment of a share of the cost, and makes payment in accordance with the bill splitting service of the mobile settlement application.

### [Configuration of Server Apparatus]

Next, a configuration of the server apparatus 10 is described with reference to FIG. 2. FIG. 2 is a block diagram illustrating an example of a configuration of a server apparatus according to the embodiment. As illustrated in FIG. 2, this server apparatus 10 includes a communication unit 11, a storage 12, and a control unit 13. Processing performed by each unit included in the server apparatus 10 is described below. Note that respective functions of the server apparatus 10 may be distributed to a plurality of apparatuses.

The communication unit 11 controls communication relating to various types of information. For example, the communication unit 11 controls communication with the store settlement apparatus 30 or communication with the terminals 20A and 20B. Furthermore, for example, the communication unit 11 uses P2P transfer between the communication unit 11 and the terminals 20A and 20B.

The storage 12 stores data and a program that are requested in various types of processing performed by the control unit 13, and includes an amount-of-money information storage 121 and a use history information storage 122, which are particularly related to the present embodiment. For example, the storage 12 is a semiconductor memory element such as a random access memory (RAM) or a flash memory, a storage device such as a hard disk or an optical disk, or the like.

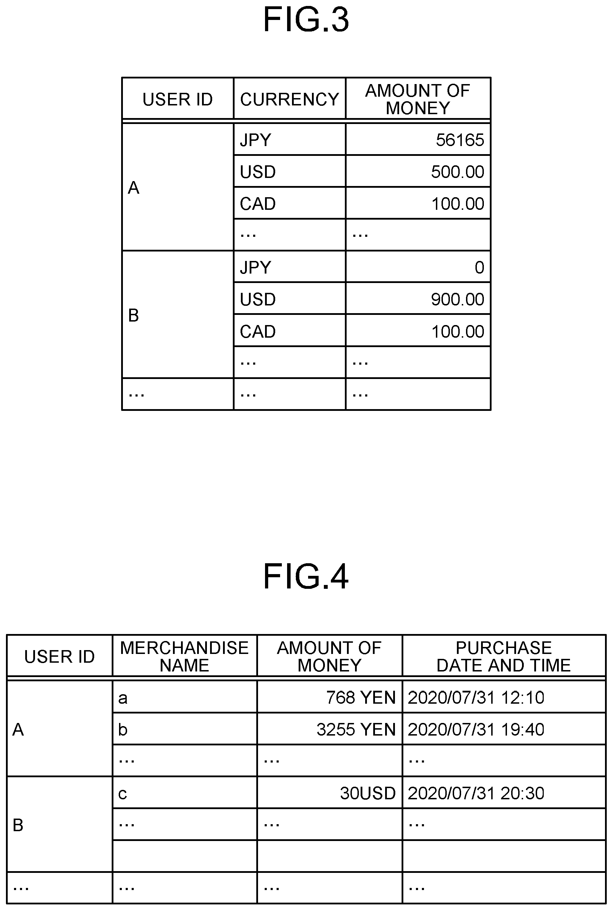

The amount-of-money information storage 121 stores, for each user, an amount of money that has been loaded in the mobile settlement application. For example, the amount-of-money information storage 121 may store a loaded amount of money that can be used as electronic money in various currencies FIG. 3 is a diagram illustrating an example of a data configuration of the amount-of-money information storage 121. As illustrated in FIG. 3, the amount-of-money information storage 121 includes items, a user ID, currency, and an amount of money, and stores a loaded amount of electronic money that is held by each of the users A and B in each currency. For example, the user A holds "56165", "500.00", and "100.00" in Japanese yen (JPY), US dollars (USD), and Canada dollars (CAD), respectively.

The use history information storage 122 stores the use history of electronic money of a user. FIG. 4 illustrates an example of a data configuration of the use history information storage 122. For example, as illustrated in FIG. 4, the use history information storage 122 stores a user ID, a "merchandise name" indicating the name of purchased merchandise, an "amount of money" indicating a purchase amount of money of the merchandise, and "purchase date and time" indicating date and time when the merchandise has been purchased in association with each other.

The control unit 13 includes an internal memory that stores a program defining various processing procedures and requested data, and performs various types of processing by using these. Here, the control unit 13 is an electronic circuit such as a central processing unit (CPU) or a micro processing unit (MPU), or an integrated circuit such as an application specific integrated circuit (ASIC) or a field programmable gate array (FPGA). The control unit 13 includes a reception unit 131, a report unit 132, and a receiving/making-payment control unit 133.

The reception unit 131 receives various reports that have been transmitted from the terminal 20A or 20B and the store settlement apparatus 30. For example, the reception unit 131 receives, from the store settlement apparatus 30, a use report (a subtraction processing request) of electronic money (Japanese yen) of the user A. Furthermore, the reception unit 131 receives, from the terminal 20A, a bill splitting report in which the sharing destination, the desired reception currency (the first currency) (for example, Japanese yen), and the shared amount of money have been set in accordance with the bill splitting service of the mobile settlement application. Furthermore, the reception unit 131 receives, from the terminal 20B, a payment report in which a type of the desired payment currency (the second currency) (for example, US dollars) in which the user B will pay a share of a cost has been set in accordance with the bill splitting service of the mobile settlement application.

The report unit 132 transmits various reports relating to electronic money settlement to the terminals 20A and 20B and the store settlement apparatus 30. For example, the report unit 132 transmits, to the store settlement apparatus 30, an electronic money (Japanese yen) processing result report (a subtraction processing result) and a receiving-payment (Japanese yen) report. Furthermore, the report unit 132 transmits a bill splitting report indicating the desired reception currency of the user A and the shared amount of money, to the terminal 20B serving as the sharing destination. Then, the report unit 132 transmits, to the terminal 20A, a bill splitting payment report indicating that the user A will finish receiving a payment of the shared amount of money in Japanese yen from the user B.

The receiving/making-payment control unit 133 controls receiving and making payments of electronic money in various currencies according to the mobile settlement application in the terminals 20A and 20B of the users. When an operation to receive payment has been performed, the receiving/making-payment control unit 133 performs control to receive the designation of a type of currency from the terminals 20A and 20B, and cause the terminals 20A and 20B to receive electronic money in the received type of currency. Furthermore, in response to the use report (the subtraction processing request) of electronic money (Japanese yen) of the user A from the store settlement apparatus 30, the receiving/making-payment control unit 133 subtracts a used amount of money from electronic money in Japanese yen that has been loaded by the terminal 20A of the user A, and causes the store settlement apparatus 30 to receive payment.

Furthermore, upon receipt of the payment report indicating the desired payment currency from the terminal 20B serving as the sharing destination, the receiving/making-payment control unit 133 obtains an amount of money in the desired payment currency that corresponds to the shared amount of money in the desired reception currency of the user A, on the basis of an exchange rate, and subtracts the obtained amount of money and a fee for currency exchange from a balance of electronic money in the desired payment currency from among types of electronic money that have been loaded by the terminal 20B serving as the sharing destination. Then, in response to the subtraction processing of electronic money in the terminal 20B serving as the sharing destination, the receiving/making-payment control unit 133 causes the shared amount of money to be received in the desired reception currency (Japanese yen) from among types of electronic money that have been loaded by the terminal 20A.

### [Loading of Electronic Money]

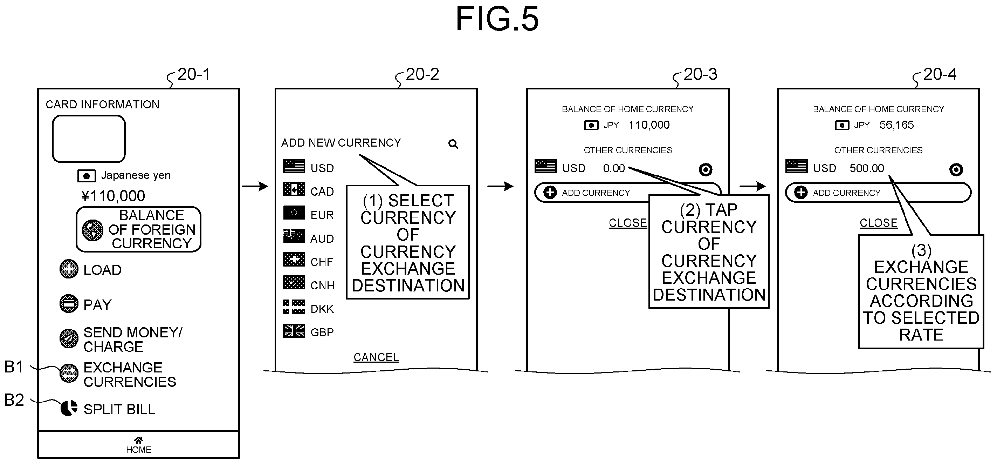

Loading of electronic money in plural types of currencies according to the mobile settlement application is described. FIG. 5 is a diagram illustrating an example of a mobile settlement application screen.

As illustrated as a screen 20-1 in FIG. 5, the mobile settlement application can perform loading electronic money in plural types of currencies, making a payment using electronic money, or the like in cooperation with credit card settlement. Specifically, description is provided by using, as an example, a case where a user has used credit card settlement to load 110,000 Japanese yen, and part of this loaded amount of money in Japanese yen is exchanged for another currency (for example, electronic money in US dollars).

In this case, the user taps a currency exchange button B1 on the screen 20-1. Then, the screen changes to a screen 20-2, and information indicating various exchangeable currencies is displayed. If the user selects a currency of a currency exchange destination from these currencies ((1) of FIG. 5), the screen changes to a screen 20-3. If the user taps the currency of the currency exchange destination ((2) of FIG. 5), the screen changes to a screen 20-4, and a rate of the selected currency is displayed. Then, if the user provides an instruction to exchange currencies according to the selected rate ((3) of FIG. 5), the exchanged electronic money of 500 US dollars is loaded onto the user's terminal, and 500 US dollars and a fee for currency exchange are subtracted from loaded Japanese yen.

### [Flow of Processing of Bill Splitting Service]

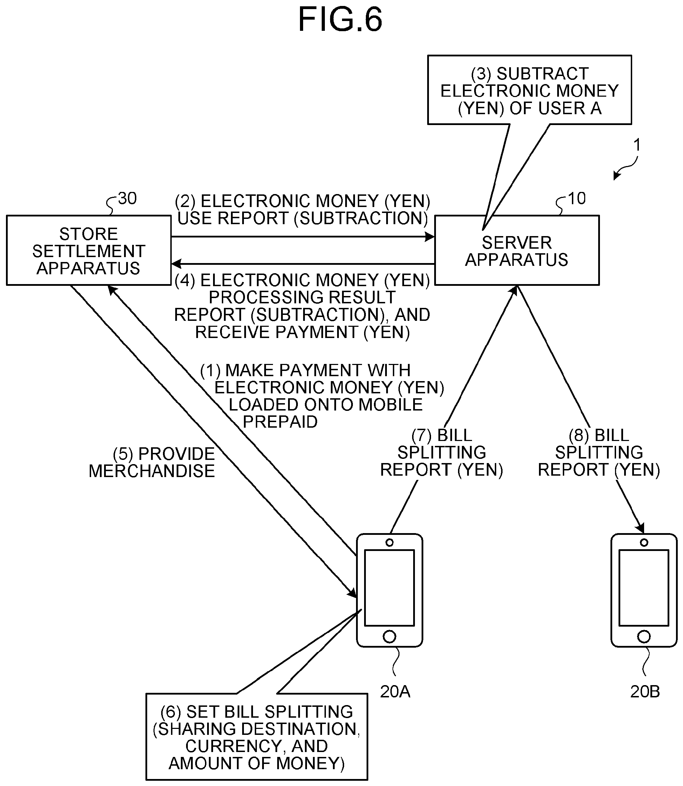

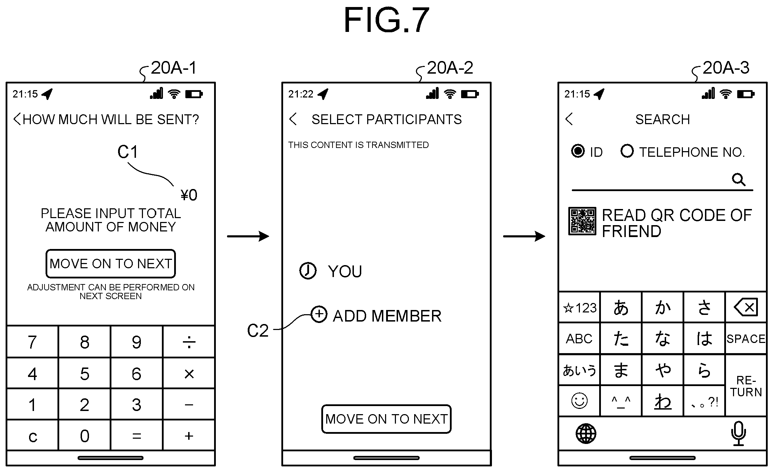

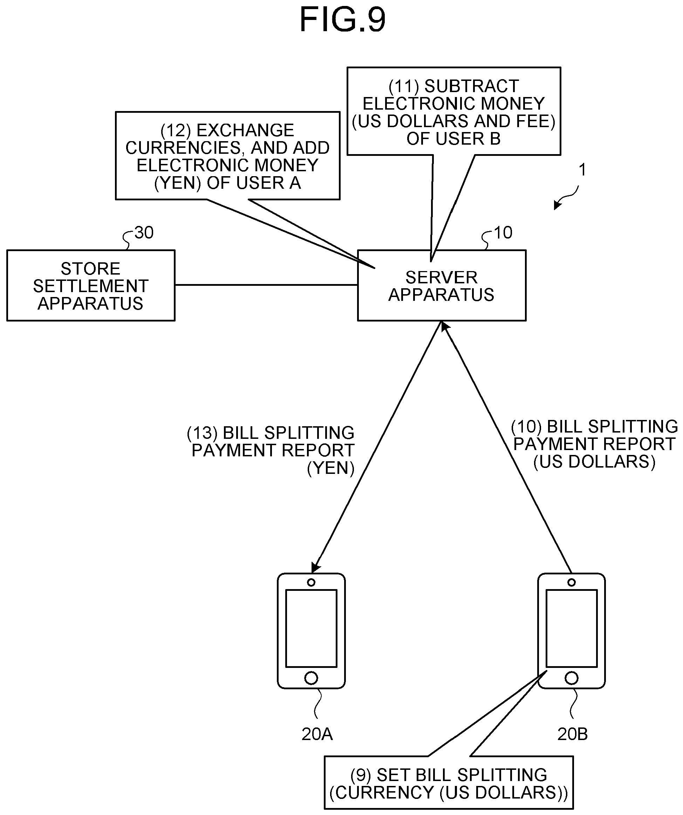

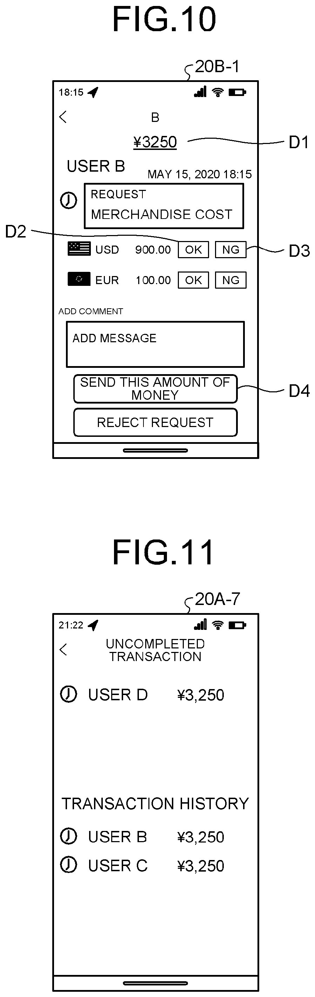

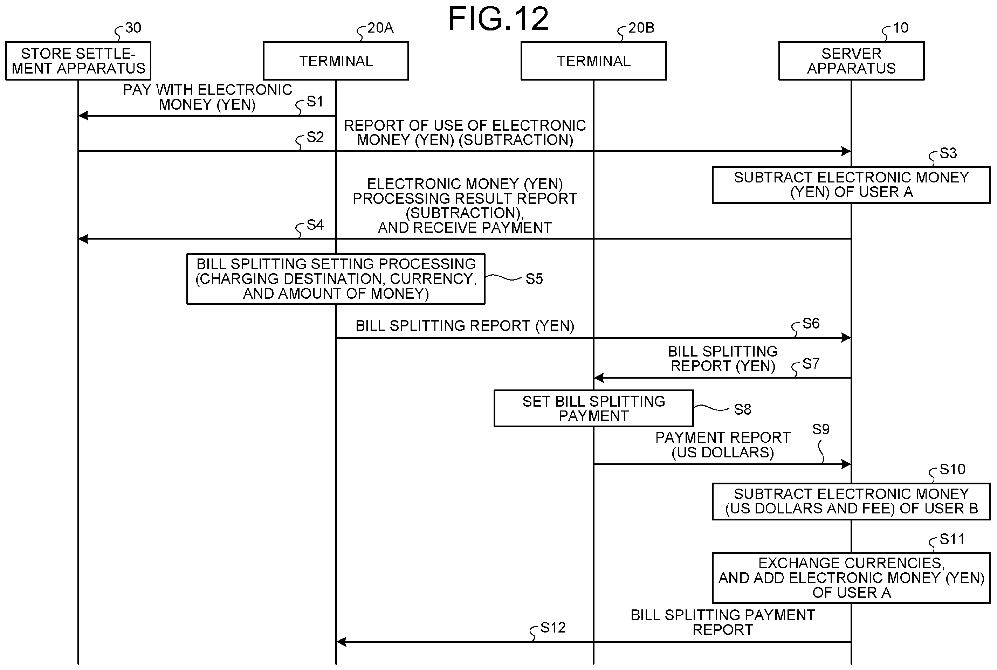

Next, the bill splitting service of the mobile settlement application according to an embodiment not covered by the subject-matter of the claims is described. FIGS. 6 and 9 are diagrams illustrating a flow of processing of the bill splitting service in the management system. FIGS. 7, 8, and 11 are diagrams illustrating an example of a screen of the terminal 20A in the use of the bill splitting service of the mobile settlement application. FIG. 10 is a diagram illustrating an example of a screen of the terminal 20B in the use of the bill splitting service of the mobile settlement application. FIG. 12 is a sequence diagram illustrating a processing procedure of management processing according to the embodiment.

First, the user A of the terminal 20A makes payment with electronic money in Japanese yen that has been loaded in the mobile settlement application ((1) of FIG. 6 and Step S1 of FIG. 12). The store settlement apparatus 30 transmits, to the server apparatus 10, the electronic money (Japanese yen) processing result report (the subtraction processing result) and the receiving-payment (Japanese yen) report ((2) of FIG. 6 and Step S2 of FIG. 12). In response to the subtraction processing request, the server apparatus 10 subtracts a used amount from electronic money in Japanese yen that has been loaded by the terminal 20A of the user A ((3) of FIG. 6 and Step S3 of FIG. 12), causes the store settlement apparatus 30 to receive payment, and transmits the electronic money (Japanese yen) processing result report (subtraction) and the receiving-payment (Japanese yen) report ((4) of FIG. 6 and Step S4 of FIG. 12). Then, merchandise is provided by a store ((5) of FIG. 6).

Then, in the terminal 20A, bill splitting setting processing for setting the sharing destination (the terminal 20B), the desired reception currency (for example, Japanese yen), and the shared amount of money is performed in accordance with the bill splitting service of the mobile settlement application ((6) of FIG. 6 and Step S5 of FIG. 12).

Specifically, if the user A selects a bill splitting service button (for example, a bill splitting button B2 on the screen 20-1 of FIG. 5), a screen 20A-1 (see FIG. 7) is displayed in the terminal 20A. The user A inputs the desired reception currency (Japanese yen) and the shared amount of money in an amount-of-money field C1 of the screen 20A-1, and inputs a bill splitting member (identification information of a terminal serving as the sharing destination) on a screen 20A-2 (see FIG. 7). In this case, for example, as illustrated as a screen 20A-3 (see FIG. 7), the bill splitting member is set, for example, by reading a user ID in the mobile settlement application, a telephone number of a terminal, or a QR code (registered trademark) of a terminal of the bill splitting member.

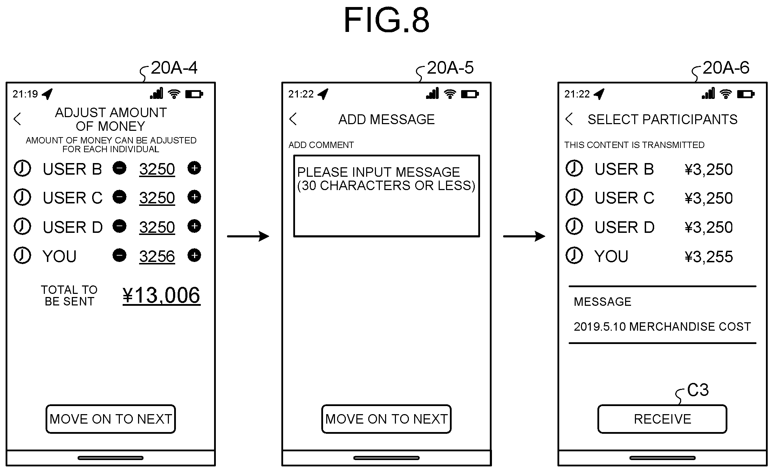

As a result of this, the user A sets bill splitting in such a way that each of users B to D will owe 3250 Japanese yen, as illustrated as a screen 20A-4 (see FIG. 8). At this time, a message can be added, as illustrated as a screen 20A-5 (see FIG. 8). Then, the user A terminates the bill splitting setting processing by selecting a "receive" button C3 on a screen 20A-6 (see FIG. 8). Note that bill splitting may be bill splitting depending on ranks. Furthermore, in a case where a request relating to a type of payment currency has been received in advance from the user B, the terminal 20A may automatically set the requested type of currency as the desired reception currency, at the time of setting bill splitting.

Then, upon receipt of the bill splitting report in which the sharing destination (the terminal 20B), the desired reception currency (Japanese yen), and the shared amount of money (for example, 3250 yen) have been set from the terminal 20A ((7) of FIG. 6 and Step S6 of FIG. 12), the server apparatus 10 reports, to the terminal 20B serving as the sharing destination, a bill splitting report indicating the desired reception currency (Japanese yen) of the user A, and the shared amount of money (for example, 3250 yen) ((8) of FIG. 6 and Step S7 of FIG. 12).

In response to this bill splitting report, the terminal 20B sets a desired payment currency according to an operation performed by the user B ((9) of FIG. 9 and Step S8 of FIG. 12). For example, in the terminal 20B, a screen 20B-1 (see FIG. 10) is displayed, and if the user B has confirmed a share in a field D1, the user B selects a currency to be used for payment. For example, in a case where US dollars are selected, the user B selects an OK button D2 from the OK button D2 and an NG button D3 in a US dollars display field, and then selects a "send this amount of money" button D4 (see FIG. 10). By performing this setting processing, the terminal 20B transmits, to the server apparatus 10, a payment report in which payment in US dollars has been set will be made ((10) of FIG. 9 and Step S9 of FIG. 12).

Upon receipt of the payment report, the server apparatus 10 obtains an amount of money in US dollars that corresponds to the shared amount of money (for example, 3250 yen) in Japanese yen desired by the user A on the basis of an exchange rate, and subtracts the obtained amount of money and a fee for currency exchange from a balance of electronic money in US dollars that has been loaded by the terminal 20B ((11) of FIG. 9 and Step S10 of FIG. 12). Then, the server apparatus 10 exchanges the subtracted US dollars for Japanese yen, and adds a share (for example, 3250 yen) to the electronic money in Japanese yen that has been loaded by the terminal 20A ((12) of FIG. 9 and Step S11 of FIG. 12).

Then, the server apparatus 10 reports, to the terminal 20A, that the user B has finished paying a split bill ((13) of FIG. 9 and Step S12 of FIG. 12), and terminates the bill splitting service. In this case, as illustrated in FIG. 11, in the terminal 20A, the history of transactions with the users B and C who have finished paying a share of bill splitting is displayed, and information relating to the user D who has not yet finished payment is also displayed.

### [Advantageous Effects of Embodiment]

As described above, in the embodiment, a bill splitting service in which the user A can select a type of a desired reception currency from among plural types of currencies of electronic money, and the user B serving as a sharing destination can also select a type of a desired payment currency is provided in the mobile settlement application.

In this case, both the users A and B can receive and pay a share of bill splitting with electronic money in currencies desired by the users A and B without a burden of currency exchange processing. Stated another way, in the embodiment, even in a case where the user B only has electronic money in US dollars and CA dollars (see FIG. 3) and in a case where the user A has desired to split the bill with electronic money in Japanese yen in a foreign country, which is not a domestic country, for example, in Japan, the user B only sets bill splitting payment with electronic money in US dollars that the user B has on the mobile settlement application, and therefore on a side of the server apparatus 10, exchange of US dollars for Japanese yen and payment of a share in Japanese yen to the user A are automatically performed. As described above, according to the present embodiment, a burden imposed on a user of currency exchange can be reduced, and the convenience of using electronic money can be enhanced.

### [Flow of Other Processing]

Furthermore, in the example described above, description is provided by using, as an example, a case where the user B themselves of the terminal 20B has set a desired payment currency of a share of a cost. However, the terminal 20B may automatically set a type of the desired payment currency according to predetermined setting conditions.

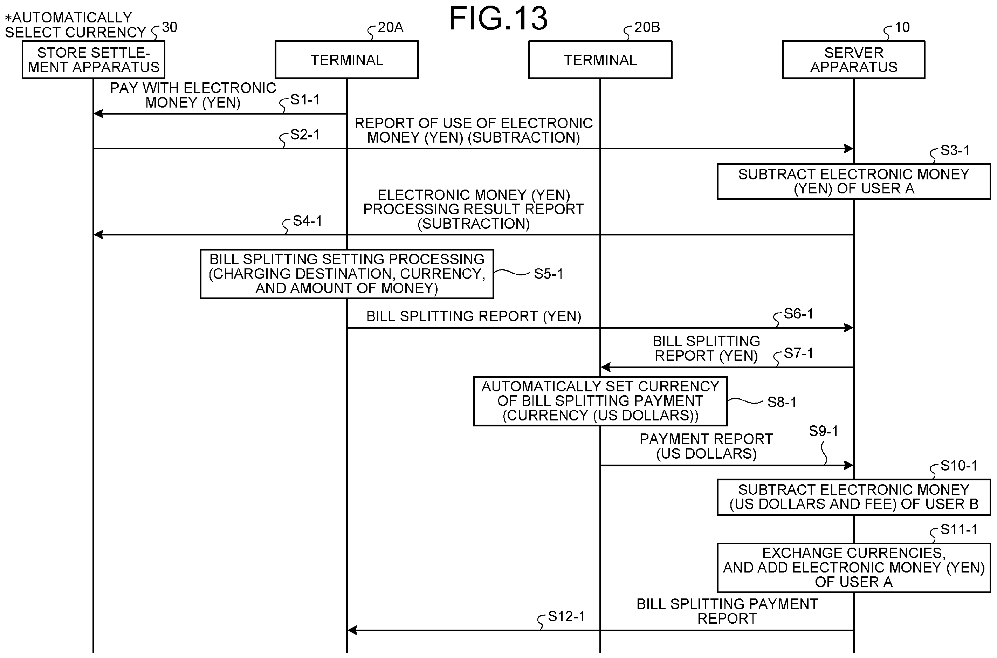

FIG. 13 is a sequence diagram illustrating another processing procedure of the management processing according to an embodiment not covered by the subject-matter of the claims. Processes of Step S1-1 to Step S7-1 illustrated in FIG. 13 are the same as processes of Step S1 to Step S7 of FIG. 12. The terminal 20B automatically sets a desired payment currency of payment of a share of bill splitting according to predetermined setting conditions (Step S8-1). Processes of Step S9-1 to Step S12-1 illustrated in FIG. 13 are the same as processes of Step S9 to Step S12 of FIG. 12.

In Step S8-1, the terminal 20B sets, for example, a currency having a large load balance of electronic money or a currency having a small load balance, as a desired payment currency, on the mobile settlement application. Alternatively, the terminal 20B sets, as the desired payment currency, a currency that the user B has set in advance as the desired payment currency on the mobile settlement application. Alternatively, the terminal 20B may set, as the desired payment currency, a currency having a high frequency of use of electronic money or a currency having a low frequency of use of electronic money on the mobile settlement application, and may set a domestic currency of the user B as the desired payment currency.

Moreover, the terminal 20B may pay a share of bill splitting in accordance with the order of currency that has been set in advance on the mobile settlement application. In this case, if the load balance of a currency having a first order is zero, the terminal 20B may perform a transition to a currency having a second order or the domestic currency of the user B, and may set the desired payment currency.

Then, in a case where a loaded amount of money is insufficient, the terminal 20B may perform exchange for a currency having the highest order in accordance with the order of currency that has been set in advance, may load electronic money, and may set payment of a share of bill splitting in the currency, on the mobile settlement application. Furthermore, on the mobile settlement application, the terminal 20B may set payment of a share of bill splitting with electronic money in a currency having an advantage of an exchange rate in comparison with other currencies, from among plural currencies of electronic money that have been loaded. Furthermore, on the mobile settlement application, the terminal 20B may perform exchange for a currency having an advantage of the exchange rate in comparison with other currencies, may load electronic money in the currency, and may set payment of a share of bill splitting in the currency.

Furthermore, in a case where a loaded amount of money is insufficient, the terminal 20B may specify a country where the terminal 20B is located, by using a location search function such as GPS, may perform exchange for a currency of the country, may load electronic money, and may set payment of a share of bill splitting in the currency. Furthermore, in a case where a loaded amount of money is insufficient, the terminal 20B may perform a shift to payment of a share of bill splitting with a credit card in cooperation.

### [Variation of Embodiment]

In the present variation, a case where each user pays a split cost with a predetermined type of electronic money (the first currency) to a store is described. In this case, each of the users can pay the split cost with electronic money in a type of currency desired by each of the users.

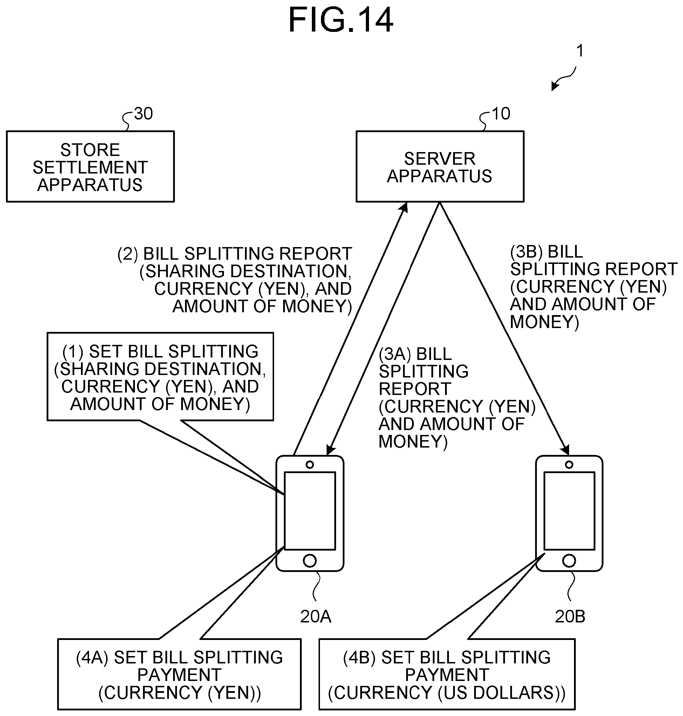

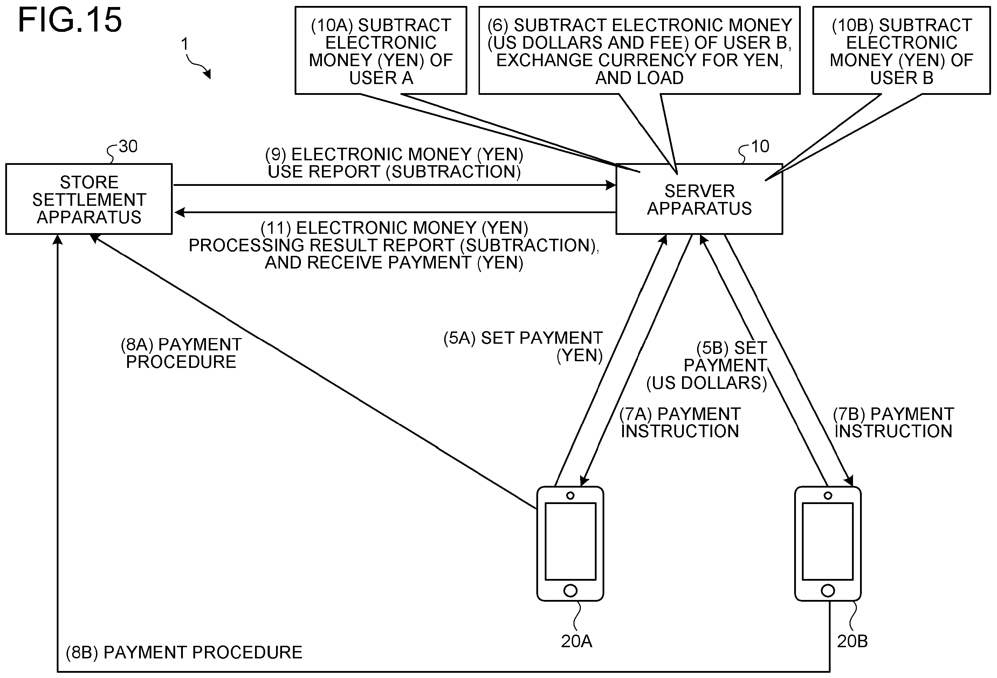

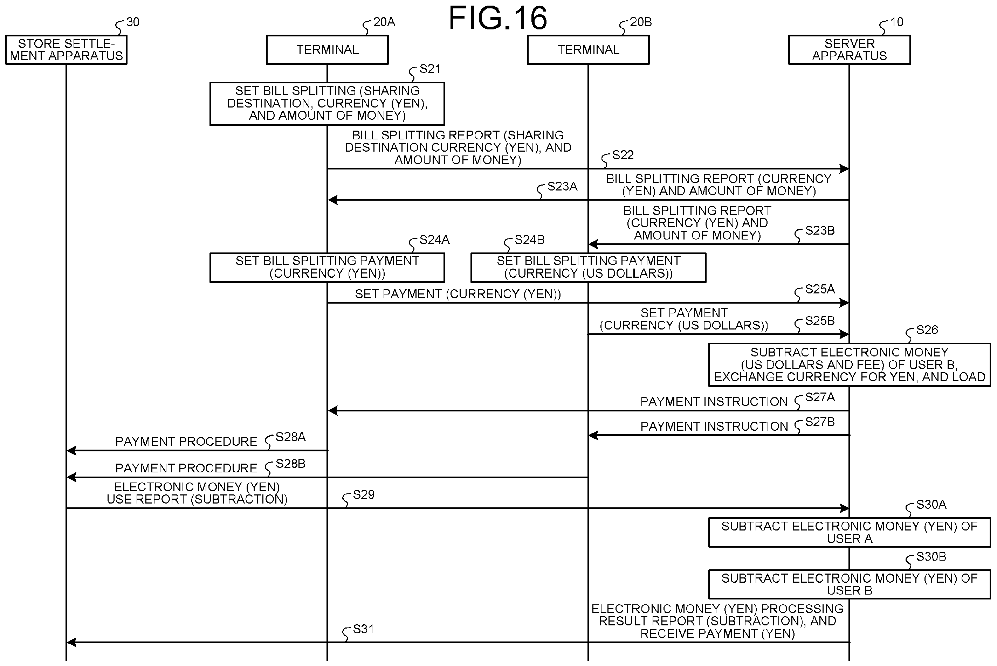

FIGS. 14 and 15 are diagrams illustrating another example of the flow of processing of the bill splitting service in the management system 1. FIG. 16 is a sequence diagram illustrating another processing procedure of the management processing according to the embodiment.

For example, the user A performs an operation, and therefore, in the terminal 20A, bill splitting setting processing for setting the sharing destination (the terminal 20A and the terminal 20B), a currency of payment to a store (Japanese yen) (the first currency), and the shared amount of money (the split amount of money) is performed in accordance with the bill splitting service of the mobile settlement application ((1) of FIG. 14 and Step S21 of FIG. 16). Upon receipt of a bill splitting report in which the sharing destination (the terminal 20A and the terminal 20B), the payment currency (Japanese yen), and the shared amount of money (for example, 3250 yen) have been set from the terminal 20A ((2) of FIG. 14 and Step S22 of FIG. 16), the server apparatus 10 reports, to the terminals 20A and 20B serving as the sharing destination, a bill splitting report indicating the payment currency (Japanese yen) and the shared amount of money (for example, 3250 yen) ((3A) and (3B) of FIG. 14 and Steps S23A and S23B of FIG. 16).

In response to this bill splitting report, the terminal 20A performs bill splitting payment setting for setting Japanese yen as the desired payment currency (the second currency) according to an operation of the user A ((4A) of FIG. 14 and Step S24A of FIG. 16), and transmits, to the server apparatus 10, a payment report in which payment in Japanese yen has been set ((5A) of FIG. 15 and Step S25A of FIG. 16). Furthermore, the terminal 20B performs bill splitting payment setting for setting US dollars as the desired payment currency according to an operation of the user B ((4B) of FIG. 14 and Step S24B of FIG. 16), and transmits, to the server apparatus 10, a payment report in which payment in US dollars has been set ((5B) of FIG. 15 and Step S25B of FIG. 16).

The server apparatus 10 receives the payment reports. Then, the user B has desired payment in US dollars, and therefore the server apparatus 10 obtains an amount of money in US dollars that corresponds to a shared amount of money in Japanese yen (for example, 3250 yen) on the basis of the exchange rate, subtracts the obtained amount of money and a fee for currency exchange from a balance of electronic money in US dollars that has been loaded by the terminal 20B, exchanges the subtracted US dollars for Japanese yen, and adds a share (for example, 3250 yen) to electronic money in Japanese yen that has been loaded by the terminal 20B ((6) of FIG. 15 and Step S26 of FIG. 16). Next, the server apparatus 10 reports an instruction to make payment to the store settlement apparatus 30, to the terminals 20A and 20B ((7A) and (7B) of FIG. 15 and Steps S27A and S27B of FIG. 16).

According to this payment instruction, the terminals 20A and 20B perform a procedure of payment to the store settlement apparatus 30 with electronic money in Japanese yen that has been loaded on the mobile settlement application ((8A) and (8B) of FIG. 15 and Steps S28A and S28B of FIG. 16). The store settlement apparatus 30 transmits, to the server apparatus 10, an electronic money (Japanese yen) processing result report (a subtraction processing result) and a receiving-payment (Japanese yen) report ((9) of FIG. 15 and Step S29 of FIG. 16). In response to a subtraction processing request, the server apparatus 10 subtracts an amount of money that has been paid to the store from electronic money in Japanese yen that has been loaded by each of the terminals 20A and 20B ((10A) and (10B) of FIG. 15 and Steps S30A and S30B of FIG. 16). Then, the server apparatus 10 causes the store settlement apparatus 30 to receive payment, and transmits an electronic money (Japanese yen) processing result report (subtraction) and a receiving-payment (Japanese yen) report ((11) of FIG. 15 and Step S31 of FIG. 16).

In a case where each of the terminals 20A and 20B pays a share of a cost in Japanese yen (the first currency), the management system 1 loads the share onto a balance of electronic money in Japanese yen of the terminal 20B in response to subtraction processing of electronic money in US dollars in the terminal 20B that makes payment in US dollars (the second currency). By performing such processing, the user B can make payment to the store with electronic money in Japanese yen, by using electronic money in US dollars that the user B has. In this case, the user B only sets bill splitting payment with electronic money in US dollars that the user B has, on the mobile settlement application, and therefore exchange of US dollars for Japanese yen and payment of a share in Japanese yen to the user A are automatically performed. Thus, electronic money can also be conveniently used in foreign countries without a burden of currency exchange.

Note that as a rate of currency to be applied, both a variable rate and a fixed rate are conceivable. Specifically, in the case of focusing on a person who makes payment on behalf of others, pattern 1 in which a rate at a point in time of bill splitting charging is the variable rate is conceivable. Note that the similar is applied to a case where the user A makes payment in a lump and a case where each of the users A and B makes bill splitting payment bill to a store.

Then, in the case of focusing on the user B who selects currency and makes payment, pattern 2 in which a rate at a point in time of bill splitting payment is the variable rate is conceivable. Note that the similar is applied to a case where the user A makes payment in a lump and a case where each of the users A and B makes bill splitting payment bill to a store.

For example, in a case where the user A (a Japanese) makes payment in a lump in Japanese yen, and the user B (for example, an American), who is a friend, pays a share of bill splitting in US dollars to the user A, a foreign exchange (FX) transaction is performed to exchange US dollars that the user B has for Japanese yen, and therefore the user A can receive payment in Japanese yen. Here, in the case of pattern 1, a rate at a point in time when the user A has charged the user B for a share of bill splitting is applied. Stated another way, this is a case where it has been determined that the user B will pay a share in US dollars at a point in time when the user A has performed charging. An example is a case where it has been desired that a payment currency be US dollars, when the user A sets bill splitting with the user B. Another example is a case where a rate at a point in time when the user B pays a share of bill splitting to the user A is applied, in the case of pattern 2. In this case, a rate at a time when bill splitting payment is determined is used. Then, in this case, it is sufficient if the user A can receive a payment in Japanese yen, and therefore the user B can change US dollars to another currency such as AU dollars.

Furthermore, as the case of the fixed rate, pattern 3 in which a store applies a rate that is fixed all day is conceivable. For example, this is a case where a store displays menu prices in foreign currencies, and a case where the store charges each user at the fixed rate in a case where the store charges each of the users by using bill splitting. For example, in a case where a store has fixed a rate for customers, and sets the rate once a day and in a case where the store issues a charge request in Japanese yen to the user A, and issues a request in US dollars to the user B, calculation is performed according to the set rate, and the user B is charged in US dollars.

Pattern 4 in which a rate at a point in time when a user has performed loading is applied is conceivable. For example, in a case where a store has converted a rate from Japanese yen to US dollars and has made a charge, if it is used that during a fixed period, for example, for 14 days, in exchange of Japanese yen for US dollars, remaining US dollars can be returned to Japanese yen according to a rate at the time of currency exchange, in payment to the store in Japanese yen by using US dollars, a comparison is made between a rate at the time of payment and US dollars after currency exchange, and an advantageous rate can be used.

Moreover, pattern 5 in which the fixed rate is applied during a travel period of a user is conceivable. This is a "rate fixed during a travel period" according to which a traveler designates a range of a budget to be used during a travel period, for example, a rate that is applied within a range from 50 US dollars to 100 US dollars. Similarly to pattern 4, a comparison is made between a rate at the time of payment and US dollars for which a range rate has been reserved, and an advantageous rate can be used.

In the present embodiment, description has been provided by using, as an example, a case where electronic money that corresponds to each currency is loaded on the mobile settlement application, and settlement is performed. However, this is not restrictive, and a type of settlement is not limited if settlement is performed by using the terminals 20A and 20B. For example, settlement processing according to the embodiment may be settlement using credit cards that have been registered in advance in the terminals 20A and 20B, in addition to mobile prepaid settlement in which electronic money is loaded onto the terminals 20A and 20B.

### [System Configuration or the Like]

Furthermore, respective components of respective illustrated apparatuses are function-conceptual, and do not always need to be physically configured as illustrated. Stated another way, a specific form of distribution or integration of the respective apparatuses is not limited to the illustrated form, and all or some of the respective apparatuses can be configured to be functionally or physically distributed or integrated in arbitrary units according to various loads or use situations. Moreover, all or some arbitrary of respective processing functions performed by the respective apparatuses can be implemented by a CPU or a graphics processing unit (GPU), and a program that is analyzed and executed by the CPU or the GPU, or can be implemented as hardware using wired logic.

Furthermore, from among respective processes described in the present embodiment, all or some of processes that have been described to be automatically performed can be manually performed. Alternatively, all or some of processes that have been described to be manually performed can be automatically performed according to a publicly known method. In addition, processing procedures, control procedures, specific names, or information including various types of data or parameters that are described or illustrated in the document above or the drawings can be arbitrarily changed unless otherwise specified.

### [Program]

Furthermore, a program describing processes to be performed by the terminals 20A and 20B and the server apparatus 10 that have been described above in the embodiment in a computer-executable language can be generated. For example, a program describing processes to be performed by the terminals 20A and 20B and the server apparatus 10 in the embodiment in a computer-executable language can also be generated. In this case, a computer executes the program, and therefore advantageous effects that are similar to advantageous effects of the embodiment described above can be exhibited. Moreover, such a program may be recorded in a computer-readable recording medium, and the program recorded in this recording medium may be read and executed by a computer, and therefore processes that are similar to processes of the embodiment described above may be achieved.

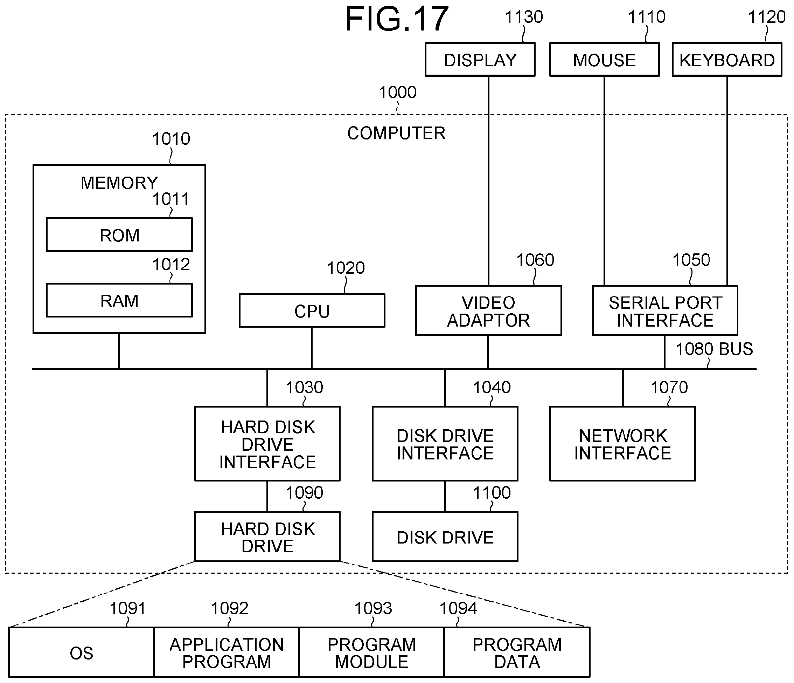

FIG. 17 is a diagram illustrating a computer that executes the program. As illustrated in FIG. 17, a computer 1000 includes, for example, a memory 1010, a CPU 1020, a hard disk drive interface 1030, a disk drive interface 1040, a serial port interface 1050, a video adapter 1060, and a network interface 1070, and these respective units are connected by a bus 1080.

The memory 1010 includes a read only memory (ROM) 1011 and a RAM 1012, as illustrated in FIG. 17. The ROM 1011 stores, for example, a boot program such as a basic input output system (BIOS). The hard disk drive interface 1030 is connected to the hard disk drive 1090, as illustrated in FIG. 17. The disk drive interface 1040 is connected to the disk drive 1100. For example, an attachable/detachable storage medium, such as a magnetic disk or an optical disk, is inserted into the disk drive 1100. The serial port interface 1050 is connected, for example, to a mouse 1110 and a keyboard 1120. The video adapter 1060 is connected, for example, to a display 1130.

Here, as illustrated in FIG. 17, the hard disk drive 1090 stores, for example, an operating system (OS) 1091, an application program 1092, a program module 1093, and program data 1094. Stated another way, the program described above is stored, for example, in the hard disk drive 1090 as a program module in which commands to be executed by the computer 1000 are described.

Furthermore, various types of data described above in the embodiment are stored as program data, for example, in the memory 1010 or the hard disk drive 1090. Then, the CPU 1020 loads the program module 1093 or the program data 1094 that has been stored in the memory 1010 or the hard disk drive 1090 into the RAM 1012, as needed, and performs various processing procedures.

Note that the program module 1093 or the program data 1094 that relates to the program is not always stored in the hard disk drive 1090, and may be stored, for example, in an attachable/detachable storage medium, and may be loaded by the CPU 1020 via a disk drive or the like. Alternatively, the program module 1093 or the program data 1094 that relates to the program may be stored in another computer that is connected via a network (a local area network (LAN), a wide area network (WAN), or the like), and may be loaded by the CPU 1020 via the network interface 1070.

### [Explanation of Reference]

- 1: MANAGEMENT SYSTEM
- 10: SERVER APPARATUS
- 11: COMMUNICATION UNIT
- 12: STORAGE
- 13: CONTROL UNIT
- 20A, 20B: TERMINAL
- 30: STORE SETTLEMENT APPARATUS
- 121: AMOUNT-OF-MONEY INFORMATION STORAGE
- 122: USE HISTORY INFORMATION STORAGE
- 131: RECEPTION UNIT
- 132: REPORT UNIT
- 133: RECEIVING/MAKING-PAYMENT CONTROL UNIT

## Claims

1. A management system (1) comprising:
a plurality of terminal apparatuses (20A, 20B), each mounted with an application that enables electronic money to be loaded in plural types of currencies;
a management apparatus (10) configured to manage the electronic money in the plural types of currencies; and
a store settlement apparatus (30),
wherein a first terminal apparatus (20A) of the plurality of the terminal apparatus (20A, 20B) is configured to use a bill splitting service of the application, and to transmit, to the management apparatus (10), a bill splitting report in which a sharing destination of a cost to be split, a type of a first currency to be paid, and a shared amount of money have been set, the shared amount of money being a share of the cost to be split;
wherein the management apparatus (10) includes a report unit (132) configured to report the bill splitting report to a second terminal apparatus (20B) being the sharing destination, upon receipt of the bill splitting report;
wherein the second terminal apparatus (20B) is configured to receive the bill splitting report from the management apparatus (10), and to transmit a payment report in which the type of a second currency has been set;
wherein the management apparatus (10) further includes a receiving/making-payment control unit (133) configured to:
receive the payment report from the second terminal apparatus (20B);
obtain an amount of money in the second currency that corresponds to the shared amount of money in the first currency on a basis of an exchange rate, upon receipt of the payment report from the second terminal apparatus (20B);
subtract the obtained amount of money from a balance of the electronic money in the second currency of the electronic money that has been loaded by the second terminal apparatus (20B);
exchange the subtracted amount of money in the second currency for the shared amount of money in the first currency; and
add the shared amount of money in the first currency to a balance of the electronic money in the first currency of the electronic money that has been loaded by the second terminal apparatus (20B);
wherein the management apparatus (10) is configured to transmit, to each of the first terminal apparatus (20A) and the second terminal apparatus (20B), an instruction to make payment to the store settlement apparatus (30) after adding the shared amount of money;
wherein the first terminal apparatus (20A) is configured to perform a procedure of payment to the store settlement apparatus (30) in the first currency in response to receiving the instruction;
wherein the second terminal apparatus (20B) is configured to perform a procedure of payment to the store settlement apparatus (30) in the first currency in response to receiving the instruction; and
wherein, in response to a request received from the store settlement apparatus (30), the management apparatus (10) is configured to:
subtract the shared amount of money from a balance of the electronic money in the first currency of the electronic money that has been loaded by the first terminal apparatus (20A) ;
subtract the shared amount of money from the balance of the electronic money in the first currency of the electronic money that has been loaded by the second terminal apparatus (20B); and
cause the store settlement apparatus (30) to receive both the shared amount of money of the first terminal apparatus (20A) and the shared amount of money of the second terminal apparatus (20B).

2. The management system (1) according to claim 1, wherein the second terminal apparatus (20B) is configured to set the type of the second currency in accordance with predetermined setting conditions, the share of the cost being paid in the second currency in accordance with the bill splitting service of the application.

3. The management system (1) according to claim 2, wherein the second terminal apparatus (20B) is configured to set, as the type of the second currency in which the share of the cost will be paid, a currency that has an advantage in the exchange rate in comparison with other currencies from among a plurality of the currencies.

4. The management system (1) according to any one of claims 1 to 3, wherein when an operation to receive a payment has been performed, the receiving/making-payment control unit (133) is configured to receive designation of the type of a currency from the second terminal apparatus (20B), and perform control to receive the payment with the electronic money in the type of the currency that has been received.

5. A management method performed by a management system (1) including: a plurality of terminal apparatuses (20A, 20B), each mounted with an application that enables electronic money to be loaded in plural types of currencies; a management apparatus (10) that manages the electronic money in the plural types of currencies; and a store settlement apparatus (30), the management method comprising:
a process performed by a first terminal apparatus (20A) of the plurality of the terminal apparatus (20A, 20B) of using a bill splitting service of the application, and transmitting, to the management apparatus (10), a bill splitting report in which a sharing destination of a cost to be split, a type of a first currency to be paid, and a shared amount of money have been set, the shared amount of money being a share of the cost to be split;
a process performed by the management apparatus (10) of reporting the bill splitting report to a second terminal apparatus (20B) being the sharing destination, upon receipt of the bill splitting report;
a process performed by the second terminal apparatus (20B) of receiving the bill splitting report from the management apparatus (10), and transmitting a payment report in which the type of a second currency has been set;
a process performed by the management apparatus (10) of:
receiving the payment report from the second terminal apparatus (20B);
obtaining an amount of money in the second currency that corresponds to the shared amount of money in the first currency on a basis of an exchange rate, upon receipt of the payment report from the second terminal apparatus (20B);
subtracting the obtained amount of money from a balance of the electronic money in the second currency of the electronic money that has been loaded by the second terminal apparatus (20B);
exchanging the subtracted amount of money in the second currency for the shared amount of money in the first currency; and
adding the shared amount of money in the first currency to a balance of the electronic money in the first currency of the electronic money that has been loaded by the second terminal apparatus (20B);
a process performed by the management apparatus (10) of transmitting, to each of the first terminal apparatus (20A) and the second terminal apparatus (20B), an instruction to make payment to the store settlement apparatus (30) after adding the shared amount of money;
a process performed by the first terminal apparatus (20A) of performing a procedure of payment to the store settlement apparatus (30) in the first currency in response to receiving the instruction;
a process performed by the second terminal apparatus (20B) of performing a procedure of payment to the store settlement apparatus (30) in the first currency in response to receiving the instruction; and
a process performed by the management apparatus (10), in response to a request received from the store settlement apparatus (30), of:
subtracting the shared amount of money from a balance of the electronic money in the first currency of the electronic money that has been loaded by the first terminal apparatus (20A);
subtracting the shared amount of money from the balance of the electronic money in the first currency of the electronic money that has been loaded by the second terminal apparatus (20B); and
causing the store settlement apparatus (30) to receive both the shared amount of money of the first terminal apparatus (20A) and the shared amount of money of the second terminal apparatus (20B).

## Patentansprüche

1. Verwaltungssystem (1), umfassend:
eine Vielzahl von Endgerätevorrichtungen (20A, 20B), die jeweils mit einer Anwendung versehen sind, die es ermöglicht, elektronisches Geld in mehreren Währungsarten zu laden;
eine Verwaltungsvorrichtung (10), die dazu ausgebildet ist, das elektronische Geld in den mehreren Währungsarten zu verwalten; und
eine Geschäftsabrechnungsvorrichtung (30),
wobei eine erste Endgerätvorrichtung (20A) der Vielzahl der Endgerätvorrichtungen (20A, 20B) dazu ausgebildet ist, einen Rechnungsteilungsdienst der Anwendung zu verwenden und an die Verwaltungsvorrichtung (10) eine Rechnungsteilungsmeldung zu übertragen, in der ein Aufteilungsempfänger von aufzuteilenden Kosten, eine Art einer zu zahlenden ersten Währung und ein Aufteilungsgeldbetrag eingestellt worden sind, wobei der Aufteilungsgeldbetrag ein Anteil der aufzuteilenden Kosten ist;
wobei die Verwaltungsvorrichtung (10) eine Meldeeinheit (132) einschließt, die dazu ausgebildet ist, bei Empfang der Rechnungsteilungsmeldung die Rechnungsteilungsmeldung an eine zweite Endgerätevorrichtung (20B) als Aufteilungsempfänger zu melden;
wobei die zweite Endgerätevorrichtung (20B) dazu ausgebildet ist, die Rechnungsteilungsmeldung von der Verwaltungsvorrichtung (10) zu empfangen und eine Zahlungsmeldung zu übertragen, in der die Art einer zweiten Währung eingestellt worden ist;
wobei die Verwaltungsvorrichtung (10) weiter eine Ein-/Auszahlungssteuereinheit (133) einschließt, die dazu ausgebildet ist:
die Zahlungsmeldung von der zweiten Endgerätevorrichtung (20B) zu empfangen;
bei Empfang der Zahlungsmeldung von der zweiten Endgerätevorrichtung (20B) einen Geldbetrag in der zweiten Währung zu erhalten, der dem Aufteilungsgeldbetrag in der ersten Währung auf der Grundlage eines Wechselkurses entspricht;
den erhaltenen Geldbetrag von einem Guthaben des elektronischen Geldes in der zweiten Währung des elektronischen Geldes, das von der zweiten Endgerätevorrichtung (20B) geladen worden ist, abzuziehen;
den abgezogenen Geldbetrag in der zweiten Währung in den Aufteilungsgeldbetrag in der ersten Währung zu tauschen; und
den Aufteilungsgeldbetrag in der ersten Währung zu einem Guthaben des elektronischen Geldes in der ersten Währung des elektronischen Geldes, das von der zweiten Endgerätevorrichtung (20B) geladen worden ist, hinzuzufügen;
wobei die Verwaltungsvorrichtung (10) dazu ausgebildet ist, nach Hinzufügen des Aufteilungsgeldbetrags sowohl an die erste Endgerätevorrichtung (20A) als auch an die zweite Endgerätevorrichtung (20B) eine Anweisung zur Vornahme einer Zahlung an die Geschäftsabrechnungsvorrichtung (30) zu übertragen;
wobei die erste Endgerätevorrichtung (20A) dazu ausgebildet ist, als Reaktion auf den Empfang der Anweisung einen Zahlungsvorgang an die Geschäftsabrechnungsvorrichtung (30) in der ersten Währung durchzuführen;
wobei die zweite Endgerätevorrichtung (20B) dazu ausgebildet ist, als Reaktion auf den Empfang der Anweisung einen Zahlungsvorgang an die Geschäftsabrechnungsvorrichtung (30) in der ersten Währung durchzuführen; und
wobei die Verwaltungsvorrichtung (10) als Reaktion auf eine von der Geschäftsabrechnungsvorrichtung (30) empfangene Anforderung dazu ausgebildet ist:
den Aufteilungsgeldbetrag von einem Guthaben des elektronischen Geldes in der ersten Währung des elektronischen Geldes, das von der ersten Endgerätevorrichtung (20A) geladen worden ist, abzuziehen;
den Aufteilungsgeldbetrag von dem Guthaben des elektronischen Geldes in der ersten Währung des elektronischen Geldes, das von der zweiten Endgerätevorrichtung (20B) geladen worden ist, abzuziehen; und
zu veranlassen, dass die Geschäftsabrechnungsvorrichtung (30) sowohl den Aufteilungsgeldbetrag der ersten Endgerätevorrichtung (20A) als auch den Aufteilungsgeldbetrag der zweiten Endgerätevorrichtung (20B) empfängt.

2. Verwaltungssystem (1) nach Anspruch 1, wobei die zweite Endgerätevorrichtung (20B) dazu ausgebildet ist, die Art der zweiten Währung in Übereinstimmung mit vorbestimmten Einstellbedingungen einzustellen, wobei der Anteil der Kosten in der zweiten Währung gemäß dem Rechnungsteilungsdienst der Anwendung gezahlt wird.

3. Verwaltungssystem (1) nach Anspruch 2, wobei die zweite Endgerätevorrichtung (20B) dazu ausgebildet ist, als Art der zweiten Währung, in der der Anteil der Kosten gezahlt wird, eine Währung einzustellen, die im Hinblick auf den Wechselkurs im Vergleich zu anderen Währungen aus einer Vielzahl von Währungen einen Vorteil aufweist.

4. Verwaltungssystem (1) nach einem der Ansprüche 1 bis 3, wobei, wenn ein Vorgang zum Empfangen einer Zahlung durchgeführt worden ist, die Ein-/Auszahlungssteuereinheit (133) dazu ausgebildet ist, eine Bezeichnung der Art einer Währung von der zweiten Endgerätevorrichtung (20B) zu empfangen und eine Steuerung durchzuführen, um die Zahlung mit dem elektronischen Geld in der Art der Währung zu empfangen, die empfangen worden ist.

5. Verwaltungsverfahren, das von einem Verwaltungssystem (1) durchgeführt wird, das Folgendes einschließt: eine Vielzahl von Endgerätevorrichtungen (20A, 20B), die jeweils mit einer Anwendung versehen sind, die es ermöglicht, elektronisches Geld in mehreren Währungsarten zu laden; eine Verwaltungsvorrichtung (10), die das elektronische Geld in den mehreren Währungsarten verwaltet; und eine Geschäftsabrechnungsvorrichtung (30), wobei das Verwaltungsverfahren umfasst:
einen von einer ersten Endgerätevorrichtung (20A) der Vielzahl der Endgerätevorrichtungen (20A, 20B) durchgeführten Prozess der Verwendung eines Rechnungsteilungsdienstes der Anwendung und der Übertragung einer Rechnungsteilungsmeldung an die Verwaltungsvorrichtung (10), in der ein Aufteilungsempfänger von aufzuteilenden Kosten, eine Art einer zu zahlenden ersten Währung und ein Aufteilungsgeldbetrag eingestellt worden sind, wobei der Aufteilungsgeldbetrag ein Anteil der aufzuteilenden Kosten ist;
einen von der Verwaltungsvorrichtung (10) durchgeführten Prozess des Meldens der Rechnungsteilungsmeldung an eine zweite Endgerätevorrichtung (20B) als Aufteilungsempfänger bei Empfang der Rechnungsteilungsmeldung;
einen von der zweiten Endgerätevorrichtung (20B) durchgeführten Prozess des Empfangens der Rechnungsteilungsmeldung von der Verwaltungsvorrichtung (10) und des Übertragens einer Zahlungsmeldung, in der die Art einer zweiten Währung eingestellt worden ist;
einen von der Verwaltungsvorrichtung (10) durchgeführten Prozess zum:
Empfangen der Zahlungsmeldung von der zweiten Endgerätevorrichtung (20B);
Erhalten eines Geldbetrags in der zweiten Währung, der dem Aufteilungsgeldbetrag in der ersten Währung auf der Grundlage eines Wechselkurses entspricht, bei Empfang der Zahlungsmeldung von der zweiten Endgerätevorrichtung (20B);
Abziehen des erhaltenen Geldbetrags von einem Guthaben des elektronischen Geldes in der zweiten Währung des elektronischen Geldes, das von der zweiten Endgerätevorrichtung (20B) geladen worden ist;
Tauschen des abgezogenen Geldbetrags in der zweiten Währung gegen den Aufteilungsgeldbetrag in der ersten Währung; und
Hinzufügen des Aufteilungsgeldbetrags in der ersten Währung zu einem Guthaben des elektronischen Geldes in der ersten Währung des elektronischen Geldes, das von der zweiten Endgerätevorrichtung (20B) geladen worden ist;
einen von der Verwaltungsvorrichtung (10) durchgeführten Prozess des Übertragens einer Anweisung nach Hinzufügen des Aufteilungsgeldbetrags sowohl an die erste Endgerätevorrichtung (20A) als auch an die zweite Endgerätevorrichtung (20B), um eine Zahlung an die Geschäftsabrechnungsvorrichtung (30) vorzunehmen;
einen von der ersten Endgerätevorrichtung (20A) durchgeführten Prozess des Durchführens eines Zahlungsvorgangs an die Geschäftsabrechnungsvorrichtung (30) in der ersten Währung als Reaktion auf den Empfang der Anweisung;
einen von der zweiten Endgerätevorrichtung (20B) durchgeführten Prozess des Durchführens eines Zahlungsvorgangs an die Geschäftsabrechnungsvorrichtung (30) in der ersten Währung als Reaktion auf den Empfang der Anweisung; und
einen von der Verwaltungsvorrichtung (10) als Reaktion auf eine von der Geschäftsabrechnungsvorrichtung (30) empfangene Anforderung durchgeführten Prozess zum:
Abziehen des Aufteilungsgeldbetrags von einem Guthaben des elektronischen Geldes in der ersten Währung des elektronischen Geldes, das von der ersten Endgerätevorrichtung (20A) geladen worden ist;
Abziehen des Aufteilungsgeldbetrags von dem Guthaben des elektronischen Geldes in der ersten Währung des elektronischen Geldes, das von der zweiten Endgerätevorrichtung (20B) geladen worden ist; und
Veranlassen, dass die Geschäftsabrechnungsvorrichtung (30) sowohl den Aufteilungsgeldbetrag der ersten Endgerätevorrichtung (20A) als auch den Aufteilungsgeldbetrag der zweiten Endgerätevorrichtung (20B) empfängt.

## Revendications

1. Système (1) de gestion comprenant :
une pluralité d'appareils terminaux (20A, 20B), chacun étant équipé d'une application qui permet de charger de l'argent électronique dans plusieurs types de devises ;
un appareil de gestion (10) configuré pour gérer l'argent électronique dans les plusieurs types de devises ; et
un appareil de règlement de magasin (30),
dans lequel un premier appareil terminal (20A) de la pluralité d'appareils terminaux (20A, 20B) est configuré pour utiliser un service de division de facturation de l'application, et pour transmettre, à l'appareil de gestion (10), un rapport de division de facturation dans lequel une destination de partage d'un coût à diviser, un type d'une première devise à payer et un montant d'argent partagé ont été définis, le montant d'argent partagé représentant une part du coût à diviser ;
dans lequel l'appareil de gestion (10) inclut une unité de rapport (132) configurée pour rapporter le rapport de division de facturation à un second appareil terminal (20B) qui est la destination de partage, lors de la réception du rapport de division de facturation ;
dans lequel le second appareil terminal (20B) est configuré pour recevoir le rapport de division de facturation en provenance de l'appareil de gestion (10), et pour transmettre un rapport de paiement dans lequel le type d'une seconde devise a été défini ;
dans lequel l'appareil de gestion (10) inclut en outre une unité de commande de réception/réalisation de paiement (133) configurée pour :
recevoir le rapport de paiement en provenance du second appareil terminal (20B) ;
obtenir un montant d'argent, dans la seconde devise, qui correspond au montant d'argent partagé dans la première devise sur la base d'un taux de change, lors de la réception du rapport de paiement en provenance du second appareil terminal (20B) ;
soustraire le montant d'argent obtenu d'un solde de l'argent électronique dans la seconde devise de l'argent électronique qui a été chargée par le second appareil terminal (20B) ;
échanger le montant d'argent soustrait dans la seconde devise contre le montant d'argent partagé dans la première devise ; et
ajouter le montant d'argent partagé dans la première devise à un solde de l'argent électronique dans la première devise de l'argent électronique qui a été chargée par le second appareil terminal (20B) ;
dans lequel l'appareil de gestion (10) est configuré pour transmettre, à chacun parmi le premier appareil terminal (20A) et le second appareil terminal (20B), une instruction pour réaliser un paiement à l'appareil de règlement de magasin (30) après l'ajout du montant d'argent partagé ;
dans lequel le premier appareil terminal (20A) est configuré pour effectuer une procédure de paiement à l'appareil de règlement de magasin (30) dans la première devise en réponse à la réception de l'instruction ;
dans lequel le second appareil terminal (20B) est configuré pour effectuer une procédure de paiement à l'appareil de règlement de magasin (30) dans la première devise en réponse à la réception de l'instruction ; et
dans lequel, en réponse à une demande reçue en provenance de l'appareil de règlement de magasin (30), l'appareil de gestion (10) est configuré pour :
soustraire le montant d'argent partagé d'un solde de l'argent électronique dans la première devise de l'argent électronique qui a été chargée par le premier appareil terminal (20A) ;
soustraire le montant partagé du solde de l'argent électronique dans la première devise de l'argent électronique qui a été chargée par le second appareil terminal (20B) ; et
amener l'appareil de règlement de magasin (30) à recevoir à la fois le montant d'argent partagé du premier appareil terminal (20A) et le montant partagé du second appareil terminal (20B).

2. Système (1) de gestion selon la revendication 1, dans lequel le second appareil terminal (20B) est configuré pour définir le type de la seconde devise conformément à des conditions de définition prédéterminées, la part du coût étant payée dans la seconde devise conformément au service de division de facturation de l'application.

3. Système (1) de gestion selon la revendication 2, dans lequel le second appareil terminal (20B) est configuré pour définir, comme type de la seconde devise dans laquelle la part du coût sera payée, une devise qui présente un avantage au niveau du taux de change par rapport à d'autres devises parmi une pluralité de devises.

4. Système (1) de gestion selon l'une quelconque des revendications 1 à 3, dans lequel, lorsqu'une opération de réception d'un paiement a été effectuée, l'unité de commande de réception/réalisation de paiement (133) est configurée pour recevoir la désignation du type d'une devise en provenance du second appareil terminal (20B), et pour effectuer une commande pour recevoir le paiement avec l'argent électronique dans le type de devise qui a été reçu.

5. Procédé de gestion effectué par un système (1) de gestion comprenant : une pluralité d'appareils terminaux (20A, 20B), chacun étant équipé d'une application qui permet de charger de l'argent électronique dans plusieurs types de devises ; un appareil de gestion (10) qui gère l'argent électronique dans les plusieurs types de devises ; et un appareil de règlement de magasin (30), le procédé de gestion comprenant :
un processus effectué par un premier appareil terminal (20A) de la pluralité d'appareils terminaux (20A, 20B) consistant à utiliser un service de division de facturation de l'application, et à transmettre, à l'appareil de gestion (10), un rapport de division de facturation dans lequel une destination de partage d'un coût à diviser, un type d'une première devise à payer et un montant d'argent partagé ont été définis, le montant d'argent partagé représentant une part du coût à diviser ;
un processus effectué par l'appareil de gestion (10) consistant à rapporter le rapport de division de facturation à un second appareil terminal (20B) qui est la destination de partage, lors de la réception du rapport de division de facturation ;
un processus effectué par le second appareil terminal (20B) consistant à recevoir le rapport de division de facturation en provenance de l'appareil de gestion (10), et à transmettre un rapport de paiement dans lequel le type d'une seconde devise a été défini ;
un processus effectué par l'appareil de gestion (10) consistant à :
recevoir le rapport de paiement en provenance du second appareil terminal (20B) ;
obtenir un montant d'argent, dans la seconde devise, qui correspond au montant d'argent partagé dans la première devise sur la base d'un taux de change, lors de la réception du rapport de paiement en provenance du second appareil terminal (20B) ;
soustraire le montant d'argent obtenu d'un solde de l'argent électronique dans la seconde devise de l'argent électronique qui a été chargée par le second appareil terminal (20B) ;
échanger le montant d'argent soustrait dans la seconde devise contre le montant d'argent partagé dans la première devise ; et
ajouter le montant d'argent partagé dans la première devise à un solde de l'argent électronique dans la première devise de l'argent électronique qui a été chargée par le second appareil terminal (20B) ;
un processus effectué par l'appareil de gestion (10) consistant à transmettre, à chacun parmi le premier appareil terminal (20A) et le second appareil terminal (20B), une instruction pour réaliser un paiement à l'appareil de règlement de magasin (30) après l'ajout du montant d'argent partagé ;
un processus effectué par le premier appareil terminal (20A) consistant à effectuer une procédure de paiement à l'appareil de règlement de magasin (30) dans la première devise en réponse à la réception de l'instruction ;
un processus effectué par le second appareil terminal (20B) consistant à effectuer une procédure de paiement à l'appareil de règlement de magasin (30) dans la première devise en réponse à la réception de l'instruction ; et
un processus effectué par l'appareil de gestion (10), en réponse à une demande reçue en provenance de l'appareil de règlement de magasin (30), consistant à :
soustraire le montant d'argent partagé d'un solde de l'argent électronique dans la première devise de l'argent électronique qui a été chargée par le premier appareil terminal (20A) ;
soustraire le montant partagé du solde de l'argent électronique dans la première devise de l'argent électronique qui a été chargée par le second appareil terminal (20B) ; et
amener l'appareil de règlement de magasin (30) à recevoir à la fois le montant d'argent partagé du premier appareil terminal (20A) et le montant partagé du second appareil terminal (20B).
